# FASCICULE DE BREVET EUROPEEN

(11) **EP 2 383 029 B1**
(45) Date de publication et mention de la délivrance du brevet: **30.11.2016**
(21) Numéro de dépôt: 11163193.3
(22) Date de dépôt: 20.04.2011
(51) Int. Cl.: B01D 46/00, F01M 13/04, B01D 46/24

(54) **Dispositif pour separer l'huile des gaz de carter d'un moteur a combustion interne**
Apparat für Gas-Öl Trennung in einem Kurbelgehäuse
Device for oil-gas separation in a crankcase

(30) Priorité: 30.04.2010 FR 1053382
(43) Date de publication de la demande: 02.11.2011
(73) Titulaire: Sogefi Filtration France, 78280 Guyancourt (FR)
(72) Inventeur: Dekyvere, Nicolas, 78610 AUFFARGIS (FR); Candy, Jérôme, 61430 ATHIS-DE-L'ORNE (FR); Guerbe, Laurent, 14000 CAEN (FR)
(74) Mandataire: Cabinet Plasseraud

(56) Documents cités:
- DE-U1- 20 302 824
- FR-A1- 2 933 626

## Description

### DOMAINE DE L'INVENTION

La présente invention est relative aux dispositifs de séparation d'éléments en suspension dans un gaz issu d'un carter de moteur à combustion interne. Le domaine d'application de l'invention concerne en particulier la séparation d'huile des gaz de carter dans les moteurs thermiques des véhicules routiers (ex : automobiles, poids lourds, motocyclette), bateaux ou moteurs thermiques industriels (groupe électrogène par exemple).

### ARRIERE-PLAN TECHNOLOGIQUE DE L'INVENTION

De manière connue en soi le carter est relié à l'admission d'air du moteur à combustion interne via un dispositif de séparation afin d'évacuer en continu les gaz de carter et d'en extraire l'huile en suspension. C'est ce qui est connu sous le nom de circuit de recyclage des gaz de carter ou gaz de blow-by par l'homme du métier. Différents moyens de séparer l'huile des gaz de carter sont employés dans l'art antérieur, parmi lesquels on peut distinguer les cyclones, les chicanes, les séparateurs centrifuges, les coalesceurs statiques et les coalesceurs dynamiques.

Les coalesceurs statiques présentent un média constitué d'un réseau de fibres traversé par les gaz blow-by et permettant la capture des fines gouttelettes d'huile. Les gouttelettes d'huile se regroupent ensuite pour former de plus grosses gouttes capables de glisser par gravité le long du média. Ces systèmes peuvent être placés dans une boîte fixée au moteur, dans le module de filtration d'huile ou dans le couvre culasse. Ils sont efficaces mais créent de la perte de charge et peuvent s'encrasser.

Les coalesceurs dynamiques présentent le même genre de média que celui utilisé dans les coalesceurs statiques, l'élément filtrant comprenant ce média étant en outre mis en rotation. Ainsi ils cumulent les avantages du coalesceur statique et des séparateurs centrifuges : l'efficacité est élevée grâce au média filtrant et la perte de charge est réduite grâce à l'effet centrifuge qui contribue à l'évacuation de l'huile hors du média. Cette mise en rotation permet d'ailleurs d'utiliser un média plus fermé et donc plus efficace tout en gardant une perte de charge acceptable. On se référera notamment au document FR 2 933 626 qui décrit un tel dispositif.

Un inconvénient de ce genre de dispositif de séparation est que sa construction est plus complexe du fait de la mobilité des pièces et des impératifs d'étanchéité entre la zone en amont de l'élément filtrant où circulent les gaz de carter et la zone en aval où circulent les gaz épurés. Il en résulte un surcoût qui limite l'utilisation des coalesceurs dynamiques.

Il existe également d'autres types de séparateurs comportant une pièce mobile formant une roue à aubes de façon à agir à la fois en tant que rotor et compresseur. Ainsi les figures 1-3 du document DE 203 02 824 U montrent par exemple un séparateur d'huile avec une roue à aubes entraînée en rotation de façon magnétique à l'aide d'aimants incorporés dans des cavités de la roue. Dans certaines formes de réalisation il est prévu, en amont de la roue et sur le tracé du chemin d'écoulement des gaz, un élément filtrant fixe ou solidaire de la partie rotative, le média de filtration étant de préférence une mousse ou un tricotage.

### OBJETS DE L'INVENTION

La présente invention a pour but de pallier un ou plusieurs des inconvénients susmentionnés en proposant un dispositif de déshuilage des gaz issus d'un carter moteur plus simple de conception, tout en présentant un bon compromis entre la perte de charge d'une part et l'efficacité de la séparation d'autre part.

A cet effet, l'invention concerne un dispositif d'épuration d'un gaz issu d'un carter de moteur à combustion interne, tel que défini dans la revendication

Par l'expression « engrenage magnétique », il faut comprendre une transmission de mouvement entre deux organes réalisée par des forces électromagnétiques (ce qui correspond à la définition donnée dans un dictionnaire en ligne à l'adresse URL suivante: http://www.larousse.com/encyclopedie/nom-commun-nom/engrenage/47913).

Ainsi, il n'est pas nécessaire d'associer un joint d'étanchéité au système d'entraînement pour éviter les fuites de gaz vers l'extérieur de la cavité. Grâce à cette disposition, l'élément de séparation peut être monté librement rotatif, sans contact avec une quelconque pièce d'entraînement en rotation. Il en résulte une simplification du montage et une diminution du coût de l'ensemble.

Dans divers modes de réalisation du dispositif d'épuration des gaz de carter selon l'invention, on peut éventuellement avoir recours en outre à l'une et/ou à l'autre des dispositions suivantes :
- plusieurs des organes magnétiques de la partie externe à la cavité sont répartis autour d'un axe défini par un premier arbre rotatif aussi appelé arbre d'entraînement (cette répartition qui est de préférence symétrique améliore sensiblement le couplage en rotation, en particulier lorsque le nombre de couples magnétiques formés est peu élevé, par exemple s'il y a moins de huit couples magnétiques formés chacun par une paire d'organes magnétiques qui s'attirent entre eux) ;
- chacun des organes magnétiques de la partie externe à la cavité est accouplé magnétiquement avec au moins un des organes magnétiques de la partie agencée à l'intérieur de la cavité ;
- l'élément de séparation est fixé, préférentiellement par encliquetage, sur un deuxième arbre rotatif creux aussi appelé arbre support ;
- le premier arbre rotatif est coaxial avec le deuxième arbre rotatif, le média coalesceur s'étendant de façon annulaire autour du deuxième arbre rotatif ;
- les organes magnétiques de la partie agencée à l'intérieur de la cavité comprennent au moins deux aimants permanents présentant chacun des pôles Nord et Sud alignés perpendiculairement à l'axe de rotation de l'élément de séparation (avec cette disposition, l'attraction peut être obtenue entre tous les organes magnétiques agencés sur une extrémité axiale de l'élément de séparation et tous les organes magnétique d'une extrémité axiale de la partie externe à la cavité pour obtenir un meilleur couple et il est alors permis de minimiser le nombre d'aimants permanents) ;
- la première paroi et/ou la deuxième paroi sont amagnétiques (cette disposition permet de ne pas générer d'interférence dans l'attraction magnétique) ; Par ailleurs, il est proposé un élément de séparation adapté pour coopérer dans un dispositif d'épuration d'un gaz issu d'un carter de moteur à combustion interne selon l'invention, en étant logé dans une cavité d'une partie du dispositif formant enveloppe. Cet élément de séparation comporte un média coalesceur agencé de façon annulaire autour d'un axe central et une pluralité d'organes magnétiques à aimantation permanente qui sont agencés du côté d'une extrémité axiale de l'élément de séparation.

Ainsi le couplage magnétique permettant la mise en rotation de l'élément de séparation peut être obtenu par l'attraction exercée par des organes magnétiques placés à faible distance de l'extrémité axiale de l'élément de séparation mais externes à la cavité du dispositif de séparation.

Selon une particularité, les organes magnétiques à aimantation permanente sont répartis autour de l'axe central.

Selon l'invention, l'élément de séparation comprend à une extrémité axiale un flasque recouvrant l'extrémité axiale correspondante du média coalesceur, ledit flasque comprenant une couche de matière composite préférentiellement injectée, la composition de ladite couche présentant une proportion majoritaire en poids de poudre métallique, la couche présentant des secteurs angulaires magnétisés formant lesdits organes magnétiques à aimantation permanente. Cet agencement permet une intégration compacte des aimants permanents.

Un procédé de fabrication est proposé pour la réalisation d'un élément de séparation adapté pour coopérer dans un dispositif à élément de séparation pour l'épuration d'un gaz issu d'un carter de moteur à combustion interne.

Ce procédé de fabrication comprend les étapes consistant essentiellement à :
- conformer un média coalesceur selon une forme annulaire autour d'un axe central ;
- fixer au moins une face axiale du média coalesceur sur un flasque plastique ;
   caractérisé en que ledit flasque est obtenu par injection d'un mélange comprenant de la matière plastique et une poudre de particules métalliques magnétisables et en ce qu'au moins deux aimants permanents sont formés au niveau dudit flasque par application d'un champ magnétique.

Avantageusement, la disposition exacte des organes magnétiques peut être choisie seulement au stade de l'application du champ magnétique, ce qui permet de fabriquer une gamme d'éléments de séparation différents (le nombre de pôles magnétiques est ajustable), adaptables selon les besoins, avec un coût de fabrication qui reste faible

Un autre avantage est que l'on s'affranchit ici des problèmes de montage et de stockage d'aimants en usine (attirance des aimants entre eux, des éléments métalliques extérieurs : copeaux, outils, ressorts...).

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue schématique en coupe verticale du dispositif de séparation selon un premier mode de réalisation conforme à l'invention ;
- la figure 2 est une vue de face du flasque aimanté utilisé dans le dispositif de la figure 1 pour permettre l'entraînement en rotation de l'élément de séparation ;
- la figure 3A est une vue de côté d'un élément de séparation identique à celui utilisé dans le dispositif de séparation de la figure 1, à l'exception du flasque aimanté ;
- la figure 3B est une vue de face du flasque montré sur la figure 3A ;
- la figure 4 est une vue schématique en coupe verticale d'un second mode de réalisation du dispositif conforme à l'invention ;
- la figure 5 est une vue schématique en coupe verticale d'un quatrième mode de réalisation du dispositif conforme à l'invention ;
- la figure 6 est une vue schématique en coupe verticale d'un cinquième mode de réalisation du dispositif conforme à l'invention ;
- la figure 7 représente schématiquement des étapes d'un procédé pour fabriquer un élément de séparation adapté pour être entraîné en rotation dans un dispositif d'épuration de gaz de carter selon l'invention.

### DESCRIPTION DES MODES DE REALISATION PREFERES DE L'INVENTION

Sur les différentes figures, des références identiques indiquent des éléments identiques ou similaires.

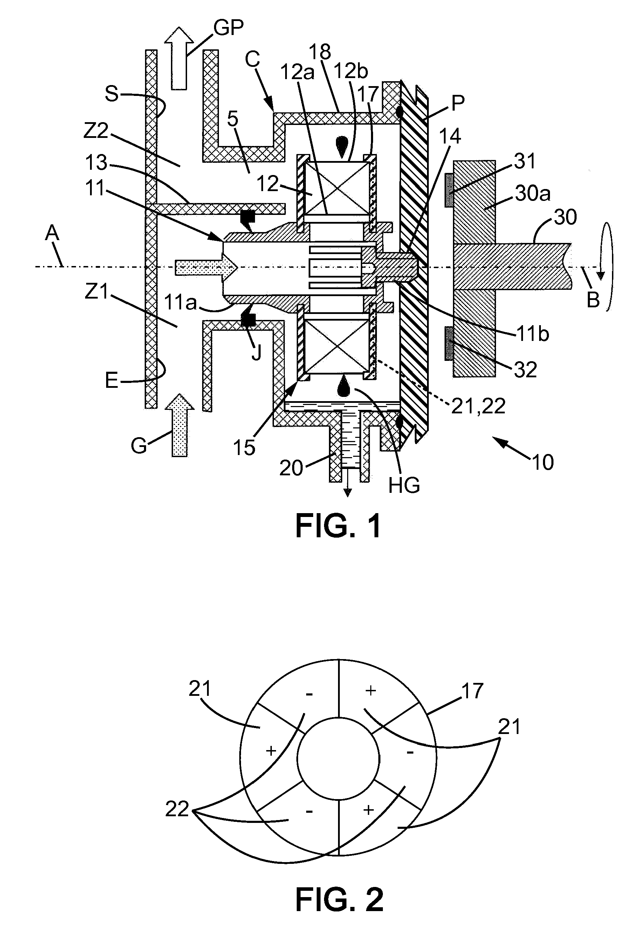

En référence aux figures 1 et 4-6, le dispositif de séparation 10 permet de séparer les parties liquides (et éventuellement solides) des gaz issus du carter de moteur à combustion interne et qui sont directement issues du carter. Le dispositif de séparation 10 fait typiquement partie d'un sous-ensemble de moteur avec une conduite de liaison rejoignant l'admission d'air.

Comme cela est visible sur chacune des figures 1 et 4 à 6, le dispositif de séparation 10 présente un élément de séparation fixé sur un arbre 11 qui est mis en rotation sans contact par accouplement magnétique avec un quelconque organe d'entraînement en rotation, par un des organes liés à la distribution, ou encore par un moteur électrique (non représenté) indépendant du moteur à combustion interne ou par un moteur hydraulique lié à la pression d'huile. A titre d'exemple nullement limitatif pour les organes d'entraînement, on peut citer le vilebrequin, l'arbre à cames ou le tendeur de chaîne, une poulie, la pompe haute-pression à gazole, l'alternateur, le compresseur de climatisation, la pompe à eau.

Dans ce qui suit, plusieurs modes de réalisation du dispositif de séparation 10 vont être décrits. La partie formant l'enveloppe du dispositif 10 reste la même dans ces différents modes de réalisation mais il doit être compris que des variantes de réalisation et d'agencement de l'enveloppe ne sont nullement exclues. De manière générale, on comprend que l'enveloppe doit comporter des parois permettant de définir une cavité qui communique avec l'extérieur par :
- au moins un conduit d'entrée E en communication avec une voie d'alimentation en gaz de carter ; et
- au moins un conduit de sortie S qui communique avec une voie d'évacuation des gaz de carter purifiés, par exemple l'admission d'air du moteur.

Pour ce qui concerne la partie formant l'élément de séparation 15, on utilise dans les modes de réalisation des figures 1 et 4 à 6 un média coalesceur 12 réalisé avec une forme sensiblement annulaire autour d'un axe central. Ce média 12 comporte en particulier au moins une surface d'entrée 12a, par laquelle arrivent les gaz non traités G dans la zone amont Z1, et au moins une surface de sortie 12b, par laquelle les gaz épurés GP ressortent. Le média 12 s'étend entre ces deux surfaces, avec une épaisseur et une composition adaptées suivant l'efficacité désirée et la perte de charge tolérable. Le média coalesceur 12 est par exemple du type plissé droit, chevron, enroulé ou autre. L'élément de séparation 15 est agencé sur l'arbre tournant 11.

L'arbre 11 rotatif est creux pour permettre aux gaz non traités G depuis le carter de moteur d'être acheminés vers le média coalesceur 12, via un évidement central 11c dans l'arbre 11. Cet évidement 11c forme la partie de la zone amont Z1 dans laquelle les gaz de carter non traités G sont amenés en contact avec la surface d'entrée 12a du média 12.

Un joint dynamique J en contact avec l'arbre 11 forme une interface entre l'enveloppe et l'élément de séparation, permettant de séparer la zone amont Z1 de la zone aval Z2 du dispositif de séparation 10. Le joint dynamique J, fixé par exemple dans une gorge du conduit d'entrée E, assure ainsi une étanchéité tournante entre l'enveloppe et l'élément de séparation.

### Premier mode de réalisation

En référence à la figure 1, le dispositif de séparation 10 comporte des conduits respectifs d'entrée E et de sortie S qui sont agencés par exemple d'un même côté et sont séparés par une paroi 13 commune. L'extrémité de chacun des conduits E et S débouche dans la cavité cylindrique définie à l'intérieur du dispositif 10. L'arbre 11 s'étend axialement dans la cavité cylindrique, entre une première extrémité libre 11a, disposée à l'intérieur du conduit d'entrée E, et une deuxième extrémité 11b qui s'engage avec une liberté en rotation dans un palier 14 ou support similaire formé à l'opposé du conduit d'entrée E. L'arbre 11 rotatif supporte l'élément de séparation 15 qui est fixé de manière à être solidaire en rotation de l'arbre 11.

L'élément de séparation 15 permet la filtration en formant l'interface entre la zone amont Z1 et la zone aval Z2. L'élément de séparation 15 comprend en particulier :
- le média coalesceur 12 ;
- deux flasques 16, 17 entre lesquels est fixé le média coalesceur 12, au moins un de ces deux flasques 16, 17 étant fixé, préférentiellement par encliquetage, sur l'arbre rotatif 11.

La partie mobile interne à la cavité comprend l'élément de séparation 15 et l'arbre 11, tandis que l'enveloppe comprend l'enceinte ou couvercle C qui enveloppe l'élément de séparation 15 et la paroi P de connexion avec le couvercle C. Le couvercle C peut le cas échéant être détaché de la paroi P. Le couvercle C présente ici une paroi périphérique 18 qui s'étend autour de l'élément de séparation 15. La paroi P s'étend transversalement par rapport à l'axe A et est ici parallèle aux flasques 16, 17.

A l'intérieur de la cavité, l'élément de séparation 15 forme une délimitation entre la zone amont Z1 de gaz non traités G communiquant avec le carter moteur et la zone aval Z2 de gaz traités GP communiquant avec la sortie S. Les gaz non traités chargés en aérosol d'huile qui entrent dans le dispositif de séparation via le conduit d'entrée E traversent le média pour ressortir à la périphérie du média coalesceur 12, en traversant la surface de sortie 12b. A l'intérieur du média, on comprend que les gouttelettes d'huile, au contact des fibres du média 12, se regroupent pour former de plus grosses gouttes qui sont ensuite poussées par le flux de gaz et la force centrifuge vers le périmètre extérieur de l'élément de séparation 15 (Le média 12 muni de telles fibres exerce ainsi une fonction de coalescence de l'huile). Par effet centrifuge, les gouttes d'huile HG qui ont acquis une masse importante sont expulsées radialement du média coalesceur 12. Ces gouttes HG viennent frapper la ou les parois 18 du couvercle C puis s'évacuent par gravité vers le drain 20. Le couvercle C peut présenter au niveau d'un point bas une zone de collecte de l'huile expulsée en aval de l'élément de séparation 15.

L'huile drainée peut retourner dans le carter par exemple en redescendant via un tuyau souple ou toute canalisation de drainage 20 débouchant sous le niveau d'huile, comme illustré à la figure 1. Alternativement, l'huile peut être stockée dans une cuve ou cavité analogue formant réservoir tampon qui se vide à l'arrêt via un clapet.

Les gaz traités GP sont guidés vers un passage qui diverge par rapport au trajet des gouttes d'huile HG. Au niveau de la surface de sortie 12b distale (périmètre extérieur), la section du média coalesceur 12 est importante, de sorte que les gaz traités GP sont ralentis et peuvent donc plus facilement s'écouler sans turbulences dans la zone aval Z2. Les gaz traités GP ressortent par la canule ou conduit de sortie S placé à proximité de l'axe central du dispositif de séparation 10 et à distance de la paroi 18 du couvercle C afin de se protéger des projections d'huile.

Selon ce premier mode de réalisation, c'est l'élément de séparation 15, ici amovible par rapport à l'arbre 11, qui permet de faire tourner l'arbre 11 et non l'inverse. L'arbre rotatif 11 qui est libre en rotation suit le mouvement de l'élément de séparation 15 qui est fixe en rotation sur cet arbre 11. Des organes magnétiques 21, 22 sont agencés dans un flasque 17 de l'élément de séparation 15 pour permettre une mise en rotation par couplage magnétique avec une partie tournante externe à la cavité et pouvant comporter un arbre rotatif 30 d'entraînement qui supporte des organes magnétiques complémentaires 31, 32. Ainsi, il est prévu un système d'entraînement formé d'au moins deux parties séparées et adapté pour faire tourner l'élément de séparation 15 par couplage magnétique. L'arbre rotatif 30 est entraîné en rotation par un élément tournant du moteur à combustion interne ou bien un moteur électrique à vitesse de rotation programmable. D'autres modes d'entraînement peuvent être prévus dans des modes de réalisation de moindre préférence.

L'élément de séparation 15 est mis en rotation grâce aux organes magnétiques 21, 22 disposés sur un des deux flasques 17 comme représenté à la figure 1. Dans cet exemple non limitatif, six organes magnétiques à aimantation permanente sont formés au niveau d'un flasque 17 proximal par rapport à la paroi P. On comprend que l'épaisseur de la paroi P, au moins au niveau de la zone d'interaction magnétique, est relativement faible, par exemple et de manière non limitative inférieure à 10mm, et de préférence inférieur à 5mm. De plus cette paroi P et éventuellement la paroi périphérique 18 du couvercle C peuvent être avantageusement amagnétiques. Les organes magnétiques 21, 22 sont entraînés par le champ magnétique des aimants formant les organes magnétiques complémentaires 31, 32 disposés en vis-à-vis à l'extérieur de l'enceinte définie par l'enveloppe. Ici, les aimants sont solidaires en rotation de l'arbre 30 externe à la cavité ou organe tournant similaire. La disposition des organes magnétiques 31, 32 de la partie externe du système d'entraînement peut être identique ou similaire à celle des organes magnétiques 21, 22 du flasque et l'agencement des organes magnétiques 21, 22 diffère de l'agencement des organes magnétiques 31, 32 par un décalage en rotation d'un pôle. Ainsi, chacun des organes magnétiques 31, 32 externes à la cavité est accouplé magnétiquement avec l'un des organes magnétiques 21, 22 agencés à l'intérieur de la cavité en étant solidaires de l'élément de séparation 15.

Dans l'exemple de la figure 1, des aimants permanents sont fixés sur un disque 30a fixé à l'extrémité de l'arbre 30 externe. Ces aimants permanents peuvent être distants les uns des autres et répartis avec un écart angulaire de 360°/N lorsque N est le nombre d'aimants permanents (ici N=6 pour correspondre aux organes magnétiques 21, 22 du flasque 17 illustré à la figure 2). Le décalage angulaire peut aussi être de 360°/N entre les deux agencements respectifs d'organes magnétiques 21, 22 et 31, 32. Dans ce mode de réalisation, les deux arbres rotatifs 11, 30 sont agencés de manière coaxiale et sont séparés axialement d'une faible distance qui est sensiblement égale à l'épaisseur de la paroi P. On peut noter que les aimants répartis sur le disque 30a pour former les organes magnétiques 31, 32 peuvent être remplacés par exemple par un flasque magnétisé identique au flasque 17 et agencé avec un décalage angulaire pour l'entraînement de l'élément de séparation 15.

Dans ce premier mode de réalisation, on comprend que les organes magnétiques 31, 32 de la partie externe à la cavité sont chacun magnétisés suivant une direction parallèle à l'axe A de rotation. La répartition autour de l'axe A des organes magnétiques 21, 22 et 31, 32 à l'intérieur à l'extérieur de la cavité, respectivement sur le flasque 17 et le disque 30a, permet d'augmenter l'interaction liée aux lignes de champ créées par des aimants permanents. De plus, l'alternance entre les pôles Nord et les pôles Sud au niveau du flasque 17 et au niveau du disque 30a permet d'obtenir un entraînement en rotation avec un minimum de glissement.

D'un point de vue cinématique, l'élément de séparation 15 placé à l'intérieur de la cavité formée par le couvercle C et la paroi P a un mouvement similaire à l'organe tournant 30, 30a.

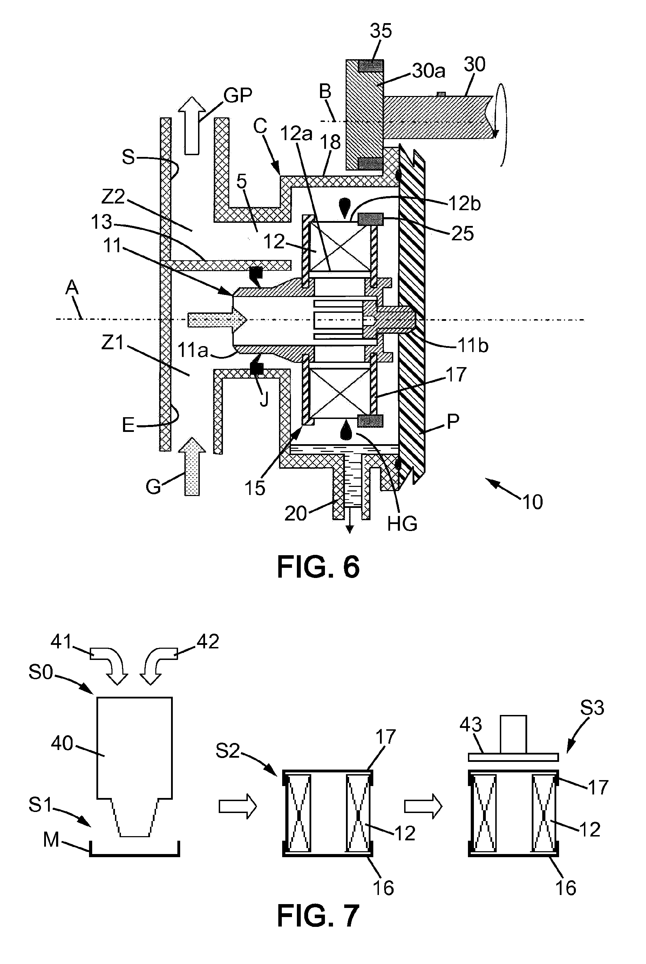

Selon ce premier mode de réalisation, les organes magnétiques 21, 22 sont intégralement formés avec le flasque 17 proximal par rapport à la paroi P qui sépare la partie interne de la partie externe du système d'entraînement. La fabrication du flasque 17 peut être obtenue avec le procédé illustré à la figure 7 ou par tout autre procédé permettant de magnétiser un corps chargé de particules magnétisables. Ainsi, on intègre de la poudre métallique (Néodyme Fer Bore préférentiellement, ferrite ou SmCo) lors de la fabrication du flasque plastique 17 de l'élément filtrant 15. Le flasque 17 obtenu (seul ou formant déjà partie de l'élément filtrant 15) est ensuite aimanté dans un générateur comportant plusieurs têtes d'aimantation. Le nombre de têtes d'aimantation est par exemple choisi en fonction du nombre N d'aimants permanents souhaités. On comprend que la génération d'un champ magnétique bipolaire ou multipolaire peut permettre d'aimanter de façon permanente les organes magnétiques 21, 22.

En référence à la figure 7, le procédé comporte les étapes suivantes :
- introduction et mélange S0 dans un dispositif injecteur 40 d'une matière plastique 41 (matrice) et d'une poudre de particules métalliques magnétisables 42 ;
- injection S1 selon une méthode conventionnelle d'injection thermoplastique, pour la réalisation (au moins en partie) du flasque 17, d'un mélange comprenant la matière plastique 41 et la poudre de particules métalliques magnétisables 42 ;
- application S3 d'un champ magnétique pour former au moins deux organes magnétiques 21, 22 à aimantation permanente au niveau dudit flasque 17, les organes magnétiques 21, 22 étant localisés de manière à définir des repères polarisés (par exemple des secteurs angulaires magnétisés comme montré à la figure 2).

Les particules 42 qui sont introduites dans la matrice sont orientées à l'aide du process d'injection (particules anisotropes). La magnétisation de la composition formant le flasque 17 permet de polariser les particules et créer des pôles Nord-Sud. On comprend que l'on peut créer de cette manière le nombre pôles que l'on souhaite avec la tête d'aimantation 43 adéquate montée sur un banc d'aimantation.

Avant ou après l'étape d'application S3 du champ magnétique, le ou les flasques 16, 17 sont assemblés avec le média coalesceur 12 (le média 12 étant conformé de manière annulaire autour de son axe central) pour former l'élément de séparation 15. Pour la réalisation de l'étape de fixation S2, le média 12 peut être collé aux flasques 16, 17 à l'aide d'une colle type PVC ou autre moyens de fixation adaptés. Un moule M peut être utilisé pour définir la forme du flasque 17 qui est préférentiellement circulaire.

Comme illustré à la figure 1, l'élément de séparation 15 est fixé sur l'arbre rotatif 11 de façon à présenter le flasque 17 fabriqué comme indiqué ci-dessus à une extrémité axiale de l'élément de séparation, dans une position proche du disque 30a qui tourne à l'extérieur de la cavité. Le flasque 17 définit ici une extrémité axiale de l'élément de séparation 15 en recouvrant l'extrémité axiale correspondante du média coalesceur 12. Pour permettre un couplage magnétique suffisamment fort, le flasque 17 comprend une couche de matière composite injectée dont la composition présente une proportion majoritaire en poids de poudre de particules métalliques magnétisables 42. A titre d'exemple non limitatif, cette proportion peut être comprise entre 60 et 90% de la masse totale du flasque 17.

L'entraînement par magnétisme à travers la paroi P du dispositif 10 permet de réaliser le système d'entraînement de manière simple, allégée et fiable. L'entraînement par magnétisme tel que montré à la figure 1 peut bien entendu être obtenu avec des organes magnétiques 21, 22 conçus indépendamment de la fabrication d'un flasque 17 de l'élément de séparation 15.

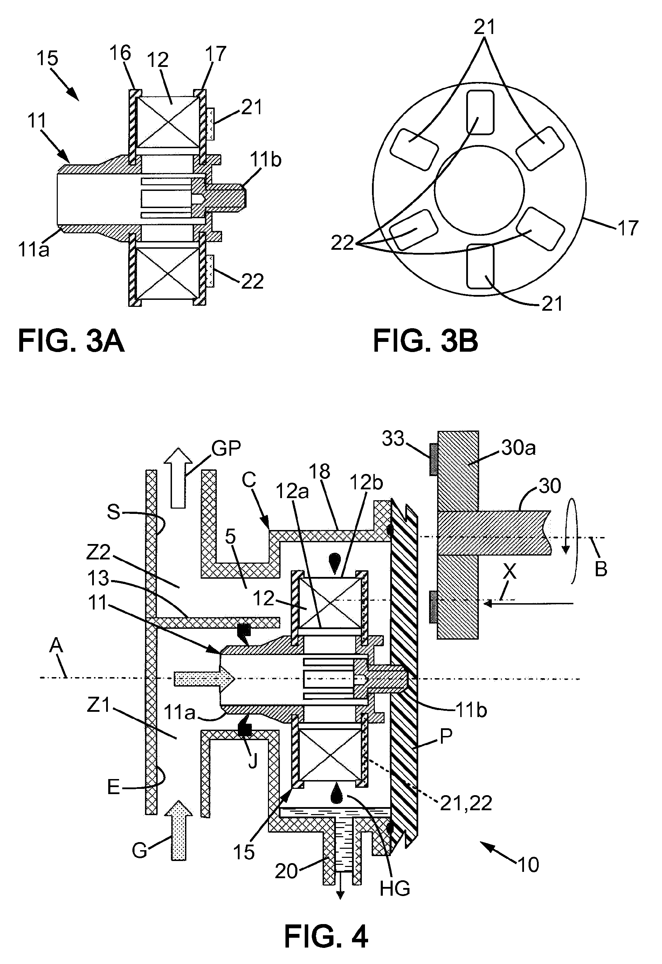

Ainsi en référence aux figures 3A et 3B, on comprend que les organes magnétiques 21, 22 peuvent être définis pas des aimants permanents formés chacun d'une pièce et fixés sur le flasque 17 de l'élément de séparation, la fixation étant ici réalisé à l'opposé de la zone de collage du média filtrant 12. Chacun des organes magnétiques 21, 22 du flasque 17 est un aimant permanent présentant des pôles Nord et Sud alignés parallèlement sur le flasque 17. On comprend que le flasque 17 tel qu'illustré à la figure 2 est dans ce cas remplacé par un flasque conventionnel en matière amagnétique ou faiblement magnétisable, sur lequel on fixe le nombre N souhaité d'organes magnétiques 21, 22. Les pôles Nord et Sud définis par ces pièces à aimantation permanente sont en regard de la paroi P et du disque 30a porteur des organes magnétiques 31, 32 complémentaires lorsque l'élément de séparation 15 montré à la figure 3a est placé dans la cavité définie par l'enveloppe du dispositif de séparation 10 tel que montré à la figure 1.

Quand les organes magnétiques 21, 22 sont réalisées sous l'une ou l'autres des formes de réalisation illustrées aux figures 2 et 3A-3B, on constate que ces organes magnétiques 21, 22 forment dans les deux cas des lignes de champ qui sont sensiblement parallèles à l'axe central de l'élément de séparation 15. Ces lignes de champ sont alors sensiblement perpendiculaires à la paroi P et traversent cette dernière lorsque l'élément de séparation 15 est placé dans la cavité en étant fixé sur l'arbre rotatif 11.

Dans une autre variante pour les organes magnétiques 21 et 22 ou 31 et 32, utilisable dans ce premier mode de réalisation, on peut utiliser du fer doux pour former, soit tout ou partie des organes magnétiques 21, 22 solidaires de l'élément de séparation 15 placé à l'intérieur de la cavité, soit tout ou partie des organes magnétiques 31, 32 complémentaires. De préférence, la pièce en fer doux a une forme similaire à l'organe en vis-à-vis qui est magnétisé de façon permanente.

Dans ce premier mode de réalisation, les organes magnétiques 21, 22 sont de préférence formés chacun à distance de l'axe central de l'élément de séparation 15 qui coïncide avec l'axe A de rotation de l'élément de séparation 15.

### Deuxième mode de réalisation

Dans la forme de réalisation illustrée à la figure 4 correspondant à un deuxième mode de réalisation pour l'entraînement par magnétisme, le dispositif de séparation 10 est très similaire à celui de la figure 1 (même enveloppe et même élément de séparation 15 à l'intérieur de la cavité) et diffère essentiellement par l'agencement de la partie externe du système d'entraînement qui est désaxée par rapport à l'axe de rotation A de l'élément de séparation. Par conséquent tout ce qui a été décrit en liaison avec la figure 1 pour l'enveloppe et l'élément de séparation 15 reste applicable ici.

On peut voir sur la figure 4 que l'arbre rotatif 30 d'entraînement qui supporte les organes magnétiques complémentaires 31, 32 tourne autour d'un axe B parallèle à l'axe A et non coaxial à l'axe A. Cet axe de rotation B est éventuellement suffisamment décalé pour que le disque 30a ou platine similaire d'entraînement magnétique ne soit pas agencé dans le prolongement de l'arbre rotatif 11 de l'élément de séparation 15. La zone d'accouplement magnétique est dans ce cas centrée autour d'un axe intermédiaire X entre les deux axes de rotation A et B et contenu dans un même plan. L'intégration du dispositif de séparation peut ainsi être plus facile, compte tenu de l'encombrement sous le capot d'un véhicule à moteur.

La rotation des organes magnétiques 31, 32 autour de l'axe B provoque un changement dans la polarité présentée en regard du flasque 17 par les aimants 31, 32, ce qui induit une rotation de l'élément de séparation 15 à l'intérieur de la cavité définie par le couvercle C et la paroi P. La cinématique est donc ici différente de celle obtenue selon l'exemple de la figure 1 car le mouvement de l'élément de séparation 15 est cette fois davantage comparable à celle d'un engrenage mécanique, les engagements mécaniques successifs étant remplacés par des actions successives de forces électromagnétiques. Il faut ainsi noter que le sens de rotation autour de l'axe B est opposé au sens de rotation de l'arbre rotatif 11 autour de l'axe A. L'entraînement par engrenage magnétique est ici permis par une succession d'attractions et/ou de répulsions entre les pôles définis par les organes magnétiques 21, 22 et 31, 32. Lorsque l'on utilise un flasque 17 tel que celui décrit à la figure 2 ou à la figure 3B avec un agencement complémentaire pour les organes magnétiques 31, 32 portés par l'organe tournant 30, 30a externe à la cavité, un engrenage magnétique est obtenu de manière très efficace. On comprend en effet qu'avec la présence de pôles Nord et Sud sur chacune des faces actives du système d'entraînement, le couple d'entraînement est plus élevé. Cependant, les variantes de réalisation exposées pour le premier mode de réalisation sont ici également applicables (en particulier on peut utiliser du fer doux en remplacement d'organes à aimantation permanente). Par ailleurs, l'arbre 30 peut être agencé différemment, par exemple en s'étendant le long d'un côté du couvercle C.

### Troisième mode de réalisation

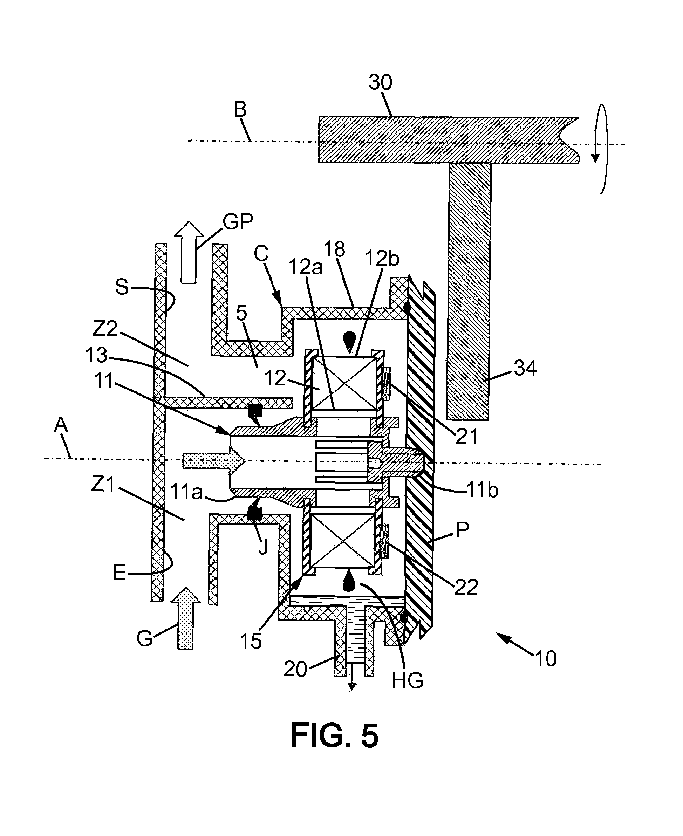

Dans la forme de réalisation illustrée à la figure 5 correspondant à un troisième mode de réalisation pour l'entraînement par magnétisme, le dispositif de séparation 10 est très similaire à celui de la figure 4. Le flasque 17 tel qu'illustré à la figure 3B est ici utilisé mais pourrait bien entendu être remplacé par un flasque avec un nombre différents d'aimants ou par un flasque 17 tel qu'illustré à la figure 2.

L'entraînement est réalisé par engrenage magnétique de manière quasiment identique à ce qui vient d'être décrit en liaison avec la figure 4. Cependant, les aimants rapportés sur le flasque 17 qui forment les organes magnétiques 21, 22 internes à la cavité sont cette fois entraînés en rotation par une masse métallique discontinue. Le mouvement de rotation de cette masse métallique peut être réalisé dans le moteur (masselotte de vilebrequin, d'arbre d'équilibrage, came ou équivalent). Le rotor externe formé par l'organe tournant 30, 34 peut donc présenter tout forme adaptée pour passer régulièrement, au moins une fois par tour, en vis-à-vis d'un axe parallèle aux axes A et B de rotation et traversant les organes magnétiques 21, 22 solidaires de l'élément de séparation 15 interne à la cavité. Autrement dit, les organes magnétiques 31, 32 qui pouvaient être répartis de manière annulaire sur un disque 30a ou platine similaire dans les exemples précédents sont ici supprimés.

Une ou plusieurs masselottes 34 raccordées radialement à l'arbre rotatif 30 peuvent donc définir le ou les organes magnétiques complémentaires pour le couplage magnétique (ici discontinu) avec les organes magnétiques 21, 22. La transmission sans contact du mouvement de rotation du rotor externe à l'élément de séparation 15 est réalisée ici par engrenage magnétique de manière simple (ce sont uniquement les forces électromagnétiques, en l'occurrence d'attraction, qui transmettent le mouvement du rotor externe à l'intérieur de la cavité).

### Quatrième mode de réalisation

Dans la forme de réalisation illustrée à la figure 6 correspondant à un quatrième mode de réalisation pour l'entraînement par engrenage magnétique, le dispositif de séparation 10 est très similaire à celui des figures 1 et 4-5 (enveloppe identique et l'ensemble rotatif défini par l'arbre 11 et l'élément de séparation 15 est logé à l'intérieur de l'enveloppe). Pour l'élément de séparation 15, seul diffère l'agencement des organes magnétiques 25. Cette fois chacun des organes magnétiques 25 est formé par un aimant permanent présentant des pôles Nord et Sud alignés perpendiculairement à l'axe de rotation A de l'élément de séparation 15 et de l'arbre 11. L'orientation des pôles magnétiques est donc ici différente de celle des organes magnétiques 21, 22 précédemment décrits.

Bien que la figure 6 montre des aimants sous la forme de pièces fixées radialement contre un bord externe du flasque 17, on comprend que les organes magnétiques 25 pourraient aussi bien être formés d'une seule pièce avec le flasque 17 en étant agencés dans la périphérie de ce dernier, par exemple en utilisant de la poudre métallique que l'on magnétise de manière adaptée.

Dans ce cas, les organes magnétiques 25 forment des lignes de champ sensiblement parallèles à la paroi P et traversant la paroi 18 du couvercle C qui est ici amagnétique. L'organe tournant 30, 30a, externe à la cavité présente des aimants 35 ou autres organes magnétiques contenant du fer agencés sur un bord externe du disque 30a ou platine similaire. Le disque 30a est de plus disposé au voisinage de la paroi 18. L'arbre B de rotation de ce rotor externe reste ici parallèle à l'axe A de rotation de l'élément de séparation 15. Alternativement, l'axe B peut être faiblement incliné.

Comme cela est visible sur la figure 6, l'engrenage magnétique correspond ici à une cinématique identique à celle obtenue avec un engrenage mécanique, le sens de rotation de l'arbre 30 autour de l'axe B étant opposé au sens de rotation de l'arbre 11 autour de l'axe A.

Dans une autre variante de réalisation, l'axe B peut être perpendiculaire ou généralement transversal à l'axe A pour présenter, en vis-à-vis des organes magnétiques 25, une face du disque 30a porteuse des aimants 35.

Un des avantages de l'invention est une simplification du dispositif qui permet d'en accroître la fiabilité. Le coalesceur dynamique ainsi obtenu permet une séparation très efficace des gaz de carter en réduisant les pertes de charge liées à la présence d'huile par rapport à un coalesceur statique. Un autre des avantages d'un dispositif 10 selon l'invention est qu'il peut être placé en dehors du carter de distribution, de sorte qu'il n'est plus soumis aux éclaboussures et arrivées massives d'huile. Il en résulte moins de pics de perte de charge et une meilleure évacuation de l'huile.

Il doit être évident pour les personnes versées dans l'art que la présente invention permet des modes de réalisation sous de nombreuses autres formes spécifiques sans l'éloigner du domaine d'application de l'invention comme revendiqué. Par exemple, la cavité peut être éventuellement définie par plus de deux pièces ou la pièce formant un couvercle peut aussi définir la paroi de séparation entre les parties interne et externe du système d'entraînement par engrenage magnétique.

Le mode de séparation d'huile des gaz carter décrit précédemment à titre illustratif n'est nullement limitatif quand à la portée de l'invention. Ainsi, l'homme du métier pourra également réaliser et appliquer l'invention à un dispositif d'épuration des gaz carter dont la zone amont de gaz non traités G communiquant avec le carter moteur serait à la périphérie de l'élément de séparation 15 et la zone aval de gaz traités GP communiquant avec la sortie serait en communication avec la partie centrale de l'élément de séparation 15. Les gaz non traités chargés en aérosol d'huile entreraient alors dans le dispositif de séparation via le conduit S, traversant le média par sa périphérie 12b pour ressortir au centre de l'élément de séparation et être évacué par le conduit E. L'huile séparée des gaz serait alors avantageusement rejetée en permanence du coté des gaz non purifiés.

## Revendications

1. Dispositif (10) d'épuration d'un gaz issu d'un carter de moteur à combustion interne, comprenant un élément de séparation (15) monté rotatif autour d'un axe (A) et présentant un média (12) coalesceur agencé de façon annulaire autour de l'axe (A), et une enveloppe qui comporte :
- au moins une première paroi périphérique (18) autour de l'élément de séparation (15) ;
- au moins une deuxième paroi (P) qui s'étend transversalement par rapport audit axe (A) et définit avec ladite paroi périphérique une cavité à l'intérieur de laquelle est logé l'élément de séparation, l'élément de séparation (15) délimitant une zone amont (Z1) de gaz non traités (G) communiquant avec le carter moteur et une zone aval (Z2) de gaz traités (GP) communiquant avec la sortie (S),
dans lequel l'élément de séparation (15) comprend deux flasques (16, 17) entre lesquels est fixé le média (12) coalesceur,
et dans lequel l'élément de séparation (15) est supporté par un arbre support (11) rotatif par rapport auquel il est amovible,
**caractérisé en ce que** ledit dispositif (10) comprend un système formé d'au moins deux parties séparées (17, 30, 30a) et qui est adapté pour l'entraînement en rotation de l'élément de séparation (15) depuis l'extérieur de la cavité par engrenage magnétique entre au moins deux organes magnétiques (31, 32 ; 33 ; 34 ; 35) d'une première (30, 30a) des deux parties, externe à ladite cavité, et au moins deux organes magnétiques (21, 22 ; 25) d'une deuxième (17) des deux parties, agencée à l'intérieur de la cavité et solidaire en rotation de l'élément de séparation (15),
et **en ce que** l'un desdits flasques (16, 17), proximal, définit une extrémité axiale de l'élément de séparation (15) située à proximité de la deuxième paroi (P) et supporte ou comprend les organes magnétiques de la deuxième des deux parties, le flasque proximal (17) comprenant une couche de matière composite préférentiellement injectée, la composition de ladite couche présentant une proportion majoritaire en poids de poudre métallique, la couche présentant des secteurs angulaires magnétisés formant lesdits organes magnétiques (21, 22) pourvus d'une aimantation permanente.

2. Dispositif selon la revendication 1, dans lequel plusieurs des organes magnétiques (31, 32) de la partie (30, 30a) externe à la cavité sont répartis autour d'un axe défini par un arbre rotatif d'entraînement (30).

3. Dispositif selon l'une ou l'autre des revendications 1 et 2, dans lequel chacun des organes magnétiques (31, 32) de la partie (30, 30a) externe à la cavité est accouplé magnétiquement avec au moins un des organes magnétiques (21, 22) de la partie (17) agencée à l'intérieur de la cavité.

4. Dispositif selon l'une quelconque des revendications 1 à 3, dans lequel l'arbre support (11) est un arbre rotatif (11) creux.

5. Dispositif selon la revendication 4, dans lequel l'arbre rotatif d'entraînement (30) est coaxial avec l'arbre support (11), le média coalesceur (12) s'étendant de façon annulaire autour de l'arbre support (11).

6. Dispositif selon l'une quelconque des revendications précédentes, dans lequel les organes magnétiques (25) de la partie agencée à l'intérieur de la cavité comprennent au moins deux aimants permanents présentant chacun des pôles Nord et Sud alignés perpendiculairement à l'axe de rotation (A) de l'élément de séparation (15).

7. Dispositif selon l'une quelconque des revendications précédentes, dans lequel la première paroi (18) et/ou la deuxième paroi (P) sont amagnétiques.

## Patentansprüche

1. Vorrichtung (10) zum Reinigen eines Gases, das aus einem Gehäuse einer Brennkraftmaschine stammt, die ein Trennelement (15) umfasst, das drehbar um eine Achse (A) montiert ist und ein ringförmig um die Achse (A) angeordnetes Tropfenbildungsmedium (12) und eine Hülle aufweist, wobei die Hülle Folgendes umfasst:
- wenigstens eine erste Umfangswand (18) um das Trennelement (15);
- wenigstens eine zweite Wand (P), die sich quer zu der Achse (A) erstreckt und mit der Umfangswand einen Hohlraum definiert, in dem das Trennelement untergebracht ist, wobei das Trennelement (15) eine stromaufseitige Zone (Z1) für nicht behandelte Gase (G), die mit dem Maschinengehäuse kommuniziert, und eine stromabseitige Zone (Z2) für behandelte Gase (GP), die mit dem Ausgang (S) kommuniziert, begrenzt,
wobei das Trennelement (15) zwei Flansche (16, 17) umfasst, zwischen denen das Tropfenbildungsmedium (12) befestigt ist,
und wobei das Trennelement (15) durch eine drehbare Trägerwelle (11) getragen wird, in Bezug auf die sie unbeweglich ist,
**dadurch gekennzeichnet, dass** die Vorrichtung (10) ein System umfasst, das aus wenigstens zwei getrennten Teilen (17, 30, 30a) gebildet ist und das dafür ausgelegt ist, das Trennelement (15) von außerhalb des Hohlraums durch magnetischen Eingriff zwischen wenigstens zwei magnetischen Organen (31, 32; 33; 34; 35) eines ersten (30, 30a) der zwei Teile außerhalb des Hohlraums und wenigstens zwei magnetischen Organen (21, 22; 25) eines zweiten (17) der zwei Teile, das in dem Hohlraum angeordnet ist und mit dem Trennelement (15) drehfest verbunden ist, rotatorisch anzutreiben,
und dass einer der Flansche (16, 17), der proximal ist, ein axiales Ende des Trennelements (15) definiert, das sich in der Nähe der zweiten Wand (P) befindet und die magnetischen Organe des zweiten der zwei Teile trägt oder umfasst, wobei der proximale Flansch (17) eine Schicht aus einem vorzugsweise eingespritzten Verbundwerkstoff aufweist, wobei die Zusammensetzung der Schicht einen Gewichtshauptanteil eines metallischen Pulvers aufweist, wobei die Schicht magnetisierte Winkelsektoren aufweist, die die magnetischen Organe (21, 22) bilden, die eine permanente Magnetisierung besitzen.

2. Vorrichtung nach Anspruch 1, wobei mehrere magnetischen Organe (31, 32) des Teils (30, 30a) außerhalb des Hohlraums um eine Achse verteilt sind, die durch die Drehantriebswelle (30) definiert ist.

3. Vorrichtung nach dem einem oder dem anderen der Ansprüche 1 und 2, wobei jedes der magnetischen Organe (31, 32) des Teils (30, 30a) außerhalb des Hohlraums mit wenigstens einem der magnetischen Organe (21, 22) des in dem Hohlraum angeordneten Teils (17) magnetisch gekoppelt ist.

4. Vorrichtung nach einem der Ansprüche 1 bis 3, wobei die Trägerwelle (11) eine hohle Drehwelle (11) ist.

5. Vorrichtung nach Anspruch 4, wobei die Drehantriebswelle (30) zu der Trägerwelle (11) koaxial ist, wobei sich das Tropfenbildungsmedium (12) ringförmig um die Trägerwelle (11) erstreckt.

6. Vorrichtung nach einem der vorhergehenden Ansprüche, wobei die magnetischen Organe (25) des Teils, das im Inneren des Hohlraums angeordnet ist, wenigstens zwei Permanentmagneten umfassen, die jeweils Nord- und Südpole aufweisen, die senkrecht zu der Drehachse (A) des Trennelements (15) orientiert sind.

7. Vorrichtung nach einem der vorhergehenden Ansprüche, wobei die erste Wand (18) und/oder die zweite Wand (P) magnetisch sind.

## Claims

1. Device (10) for purifying a gas coming from a casing of an internal combustion engine, comprising a separating element (15) mounted rotating around an axis (A) and having a coalescing medium (12) arranged angularly around the axis (A), and an envelope that comprises:
- at least one first peripheral wall (18) around the separating element (15);
- at least one second wall (P) that extends transversally in relation to said axis (A) and defines with said peripheral wall a cavity inside of which is housed the separating element, with the separating element (15) delimiting an upstream zone (Z1) of untreated gases (G) communicating with the engine casing and a downstream zone (Z2) of treated gases (GP) communicating with the outlet (S),
wherein the separating element (15) comprises two flanges (16, 17) between which the coalescing medium (12) is fixed,
and wherein the separating element (15) is supported by a rotating support shaft (11) in relation to which it is movable,
**characterised in that** said device (10) comprises a system from at least two separate parts (17, 30, 30a) and which is adapted for the driving in rotation of the separating element (15) from the outside of the cavity by a magnetic gear between at least two magnetic bodies (31, 32; 33; 34; 35) of a first (30, 30a) of the two parts, external to said cavity, and at least two magnetic bodies (21, 22; 25) of a second (17) of two parts, arranged inside the cavity and integral in rotation with the separating element (15),
and **in that** one of said flanges (16, 17), proximal, defines an axial end of the separating element (15) located in the vicinity of the second wall (P) and supports or comprises the magnetic bodies of the second of the two parts, the proximal flange (17) comprising a layer of preferably injected magnetic material, the composition of said layer having a major proportion by weight of metal powder, the layer presenting magnetised angular sectors forming said magnetic bodies (21, 22) provided with a permanent magnetization.

2. Device according to claim 1, wherein several of the magnetic bodies (31, 32) of the part (30, 30a) external to the cavity are distributed around an axis defined by a rotating drive shaft (30).

3. Device according to one or the other of the claims 1 and 2, wherein each one of the magnetic bodies (31, 32) of the part (30, 30a) external to the cavity is magnetically coupled with at least one of the magnetic bodies (21, 22) of the part (17) arranged inside the cavity.

4. Device according to any of claims 1 to 3, wherein the support shaft (11) is a hollow rotating shaft (11).

5. Device according to claim 4, wherein the rotating drive shaft (30) is coaxial with the support shaft (11), the coalescing medium (12) extending annularly around the support shaft (11).

6. Device as claimed in any preceding claim, wherein the magnetic bodies (25) of the part arranged inside the cavity comprise at least two permanent magnets each having North and South poles perpendicularly to the axis of rotation (A) of the separating element (15).

7. Device as claimed in any preceding claim, wherein the first wall (18) and/or the second wall (P) are non-magnetic.
